**Europäisches Patentamt**

**European Patent Office**

**Office européen des brevets**

(11) Publication number: **0 272 943**
**A1**

## EUROPEAN PATENT APPLICATION

(21) Application number: **87311436.7**

(22) Date of filing: **24.12.87**

(51) Int. Cl.⁴: **B 60 J 7/04**
**B 60 J 7/19**

(30) Priority: **24.12.86 GB 8630868**
**08.05.87 GB 8710943**

(43) Date of publication of application:
**29.06.88 Bulletin 88/26**

(84) Designated Contracting States: **ES**

(71) Applicant: **ARROWIN LIMITED**
**Units 5-7 Planetary Road Industrial Estate Planetary Road**
**Wolverhampton WV13 3XB (GB)**

(72) Inventor: **Bradley, Dennis**
**Howards Cottage Newport Road**
**Gnosall Stafford (GB)**

**Hammond, Michael Philip**
**Holbeace Beech Hurst Gardens**
**Seisdon Wolverhampton (GB)**

**Webb, Kevin Edward**
**17, Wicklow Close**
**Hayley Green Halesowen West Midlands (GB)**

(74) Representative: **Brunner, Michael John et al**
**GILL JENNINGS & EVERY 53-64 Chancery Lane**
**London WC2A 1HN (GB)**

(54) Vehicle sunroof.

(57) A vehicle sunroof comprises a frame (1) for mounting in a vehicle roof and a panel (4) supported in the frame on a pair of elongate side support members (9) on which the panel is mounted. At the front end (2) the side support members are pivotally mounted on respective front supports (7) slidable relative to the frame. The side support members (9) each have an elongate slot (12) inclined to the general plane of the panel so as to slope away from the panel towards the front end, respective rear supports (8) being engaged with the slots and being slidable relative to the frame. The arrangement is such that movement of the rear supports (8) along the slots from the rear end (3) towards the front end (2), by means of the inclination of the slots, causes the rear edge of the panel to be lifted away from the frame, whereafter rearwards sliding of the front and rear supports together slides the tilted panel rearwards.

Fig.1(A).

Bundesdruckerei Berlin

**Description**

VEHICLE SUNROOF

The present invention relates to vehicle sunroofs and, more particularly, to sunroofs of the so-called tilt-and-slide type.

Sunroofs of the tilt-and-slide type are frequently fitted as original equipment by vehicle manufacturers, and such sunroofs have a glass or metal panel which can be arranged either to tilt by opening at its rear edge, or to slide rearwardly underneath the roof panel itself. Thus, the panel can be opened a short distance, by tilting at its rear edge, or can be opened fully, by sliding rearwardly.

There is a demand, however, for tilt-and-slide roofs to be fitted to existing vehicles and, unfortunately, a serious problem in this regard is that without major reconstruction of the interior of the vehicle roof tilt-and-slide sunroofs of the above-mentioned type cannot be fitted. To carry out major internal reconstruction is prohibitively expensive.

In order to overcome this problem a different type of tilt-and-slide sunroof has been proposed. In this type of sunroof the rear edge may be opened in a conventional fashion, but to open the sunroof from the front edge, instead of the sunroof panel sliding rearwardly underneath the roof itself, it is arranged to slide rearwardly outside the roof whilst remaining in its tilted position. This also has the advantage that there is no reduction in headroom within the vehicle. However, tilting is generally achieved by means of a pivoting lever positioned towards the rear of the sunroof frame and, in some cases, sliding relative to the sunroof panel when it is slid backwards (see, for example, GB-A-2078295). In such cases, whilst it is possible to open the front of the sunroof by rearward sliding of the sunroof panel in the tilted position, it is generally not possible to open the sunroof by more than about 30 to 40%. Thus, one of the major benefits of original equipment tilt and slide sunroofs is not achieved with retrofitted roofs of this type, namely the ability for a wide opening in the roof to be achieved.

In order to overcome this problem and in accordance with the present invention there is provided a vehicle sunroof comprising a frame for mounting in a vehicle roof and a panel supported in the frame on a pair of elongate side support members on which the panel is mounted; at the front end the side support members being pivotally mounted on respective front supports slidable relative to the frame; the side support members each having an elongate slot inclined to the general plane of the panel so as to slope away from the panel towards the front end, respective rear supports being engaged with the slots and being slidable relative to the frame; the arrangement being such that movement of the rear supports along the slots from the rear end towards the front end, by means of the inclination of the slots, causes the rear edge of the panel to be lifted away from the frame, whereafter rearwards sliding of the front and rear supports together slides the tilted panel rearwards.

Preferably, the front and rear supports are arranged to be coupled together when the rear support has reached its forward position. In order to achieve this coupling, a lever may be provided in the handle assembly for rotation by the user when the rear support has reached its forward position, this rotation releasing a link, pivotally attached to the front support, to allow it to engage a pin on the rear support. In addition, the rotation of this lever releases the front support, to allow the panel to be moved rearwards. By this means, when it is desired to close the roof, it can be ensured that the panel has to be moved forwards before the rear edge can be lowered into its closed position within the frame. Note that rotation of the lever is prevented unless the rear support is adjacent to the front support i.e. unless the supports are in a position where they can be coupled together.

An advantage of this construction is that, during the tilting motion, there is no rearwards movement of the panel so that the front edge of the panel remains sealed to the front of the frame, thus preventing excessive wind noise and draughts.

One example of a sunroof constructed in accordance with the present invention will now be described with reference to the accompanying drawings in which:-

Figures 1A and 1B show, in longitudinal section, a sunroof in the closed and tilted/open positions respectively;

Figure 2 shows a partially sectioned plan view of one side of the sunroof; and,

Figure 3 shows a cross-sectional view through an actuating handle assembly.

Figure 4 shows a plan view of the handle assembly.

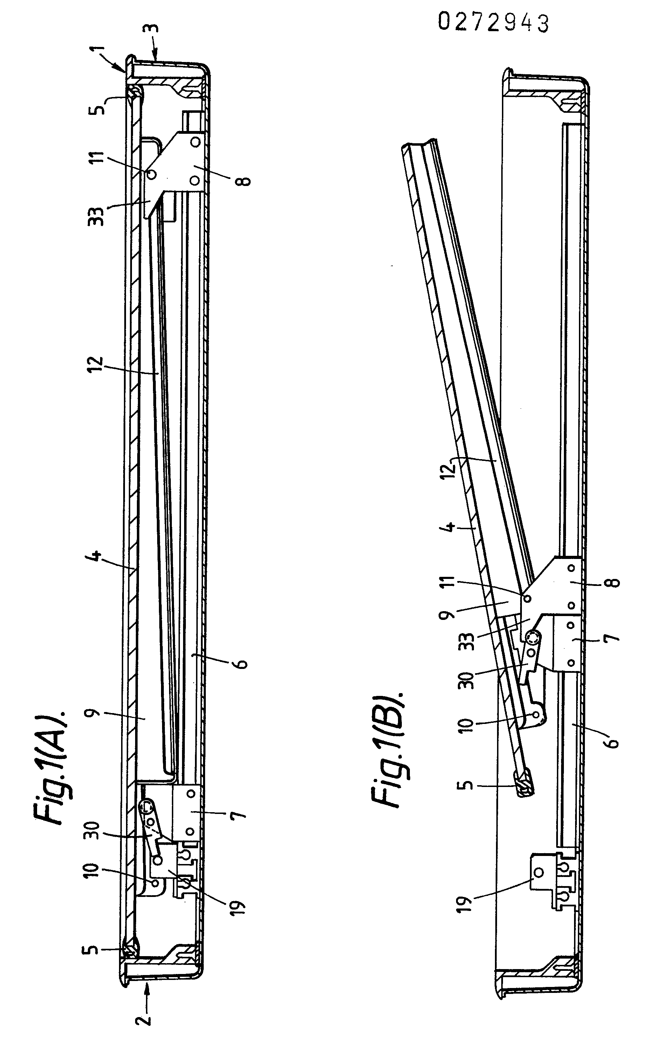

The sunroof itself has a frame 1 having a front 2 and a rear 3. In the frame is mounted a glass panel 4, the glass panel having a surrounding compressible sealing gasket 5 which seals the panel within the frame as can be seen in Figure 1A.

On each side of the frame is mounted an elongate slider support element 6 in which are arranged to slide a pair of supports 7 and 8. The front support 7 pivotally mounts an elongate panel support 9 by means of a pivot 10 and the rear support 8 is also connected to the elongate support 9, but is engaged, by means of a bearing pin 11, with an elongate slot 12 formed in the support panel 9. The axis of the slot 12 is, as can be seen from Figures 1A and 1B, inclined relative to the plane of the panel 4 in a direction sloping away from the plane of the panel towards the front of the sunroof assembly. In use, a rotatable drive cable 13 is arranged to cause the rear slider 8 to move forwardly from the position shown in Figure 1A to the position shown in Figure 1B, thus providing a camming action which lifts the rear edge of the panel.

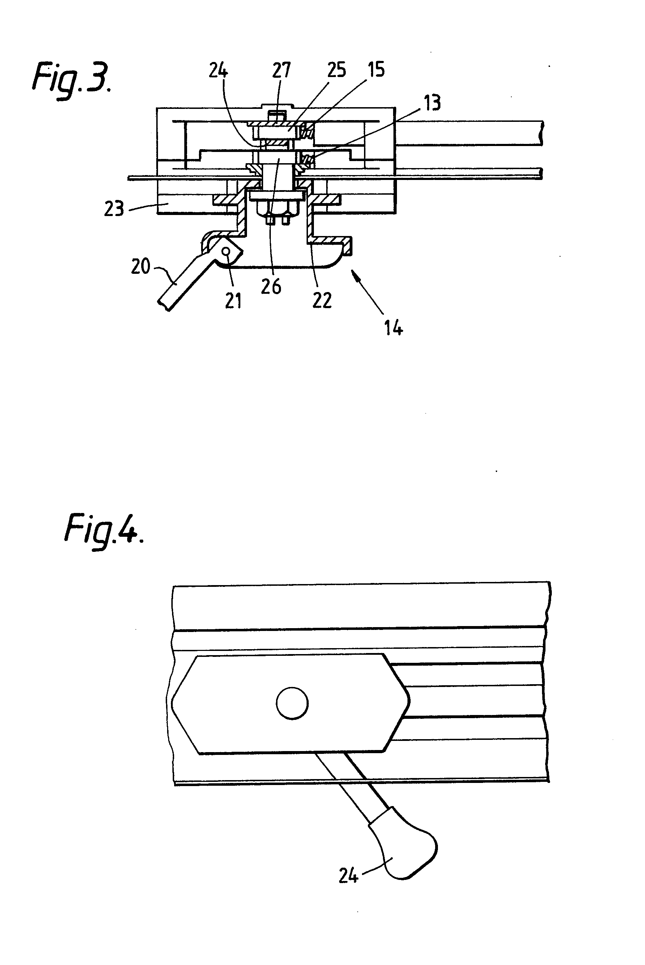

The handle assembly 14 shown in cross-section in Figure 3 comprises a handle 20 pivotally mounted by a pivot pin 21 on a rotatable bearing assembly 22. The bearing assembly 22 is mounted for rotation within a bearing housing 23 and is arranged to drive a gearwheel 26. The gearwheel 26 is mounted on a support pin 27 and is engaged with the drive cable 13. The rear support 8 is also engaged with the drive cable 13 and the arrangement is such that rotation of the handle 20 in one direction will cause the rear support 8 to move in a forward direction, whilst rotation of the handle in the other direction will cause the rear support to move in a rearward direction.

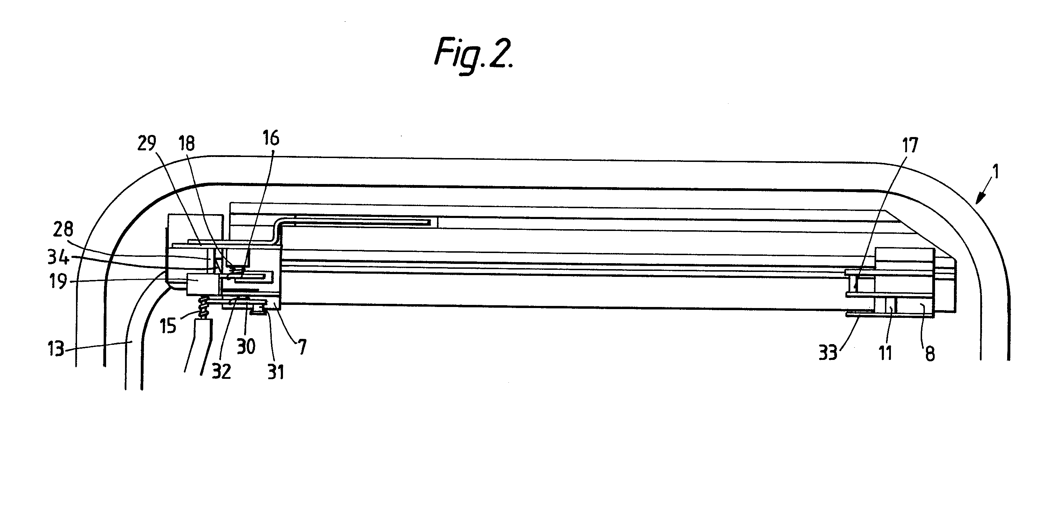

A lever 24 is rigidly attached to a gear 25 which is engaged with a cable 15. As shown in Figures 1A and 1B, a slider 19 is also engaged with the cable 15. A hooked link 16 is pivotally mounted on the first support 7, and is biased upwardly (anticlockwise as shown in Figures 1A, 1B into engagement with a pin 17 on the rear support 8) by a tension spring 18. However, in the Figures 1A and 2 the link 16 is held out of engagement with the pin 17 by means of the slider 19. A member 28, extending from the slider 19 along the axis of movement of the slider, engages an aperture in an extension 29. The extension 29 is rigidly attached to the front support 7, and the engagement of the member 28 with the aperture prevents sliding of the front support during movement of the rear support 8 alone. A member 30 with a cam surface 31 is pivotally attached to the front support. The cam surface 31 end is biased upwardly by a spring 32 such that in the position shown in figures 1A and 2 movement of the slider is prevented by the member 30. However, when the rear support is brought into engagement with the front support, extension 33 on the rear support engages the surface 31 in a camming action. This causes the member 30 to pivot against the biasing force of the spring 32, out of the path of movement of the slider 19, thus allowing the slider 19 to be moved by rotation of the lever 24.

Rotation of the lever 24 in one direction will cause the slider 19 to move so as to allow the spring 18 to bias the link 16 upwards into engagement with the pin 17, thus coupling the front and rear supports, and to disengage the member 28 from the aperture in the extension 29, releasing the front support; rotation of the lever 24 in the opposite direction will cause the member 28 to re-engage the aperture and will move the slider 19 back into contact with the link 16. The slider has a cam surface 34 to move the hooked end of the link 16 downwards when moved into contact with the link, decoupling the front and rear supports.

When the rear support 8 reaches the end of its forwards travel the lever 24 is rotated so as to move the slider 19 out of contact with the link 16 and to release the front support for movement as described above. The link then engages the pin 17 on the rear support, so coupling the front and rear supports together. The handle 20 is then rotated in the opposite direction in order to drive the rear support 8, and thus the front support 7 coupled to it, backwards, opening the aperture to the preferred size.

In order to close the sunroof, the handle 20 is rotated in the first direction so as to drive the panel supports forward. When the supports reach the end of their forward travel, the lever 24 is rotated so as to move the slider 19 back into contact with the link 16 and so as to cause the member 28 to re-engage the aperture in the extension 29. The hooked end of the link is forced downwards, decoupling the front and rear supports. The handle 20 is then rotated in the second direction so as to drive the rear support backwards, forcing the panel 4 to be lowered from its tilted position. Movement of the rear support out of contact with the front support allows the spring 32 to bias the member 30 back into a position whereby movement of the slider 19 is inhibited.

Note that the supports can only be decoupled when they are at their most forward position. This prevents any attempt to lower the panel 4 when the roof aperture is open.

A particular advantage of the construction of the invention, as will be appreciated from Figure 1B, is that, in the tilted position, the panel is supported solely towards its front edge so that there is no rearwards link between the panel and the frame to prevent the panel from sliding backwards. Thus, the panel may be opened to a greater extent than possible with prior art sunroofs of this type.

In addition, when tilting occurs, and because the front support 7 remains stationary at this time, the front edge of the panel is still well sealed to the front frame, thus preventing extraneous flow of air through the front edge of the panel when in the tilted position.

As is conventional the handle 20 is movable between an operative position as shown and a retracted position (not shown).

**Claims**

1. A vehicle sunroof comprising a frame (1) for mounting in a vehicle roof and a panel (4) supported in the frame on a pair of elongate side support members (6) on which the panel is mounted, at the front end (2) the side support members (6) being pivotally mounted on respective front supports (7) slidable relative to the frame (1); characterised in that:

the side support members (6) each have an elongate slot (12) inclined to the general plane of the panel (4) so as to slope away from the panel towards the front end (2), respective rear supports (8) being engaged with the slots (12) and being slidable relative to the frame; and the arrangement being such that movement of the rear supports (8) along the slots from the rear end (3) towards the front end (2), by means of the inclination of the slots, causes the rear edge of the panel to be lifted away from the frame, whereafter rearwards sliding of the front and rear supports together slides the tilted panel rearwards.

2. A sunroof according to claim 1, wherein the front and rear supports (7,8) are arranged to be coupled together when the rear support (8) has reached its forward position.

3. A sunroof according to claim 2, wherein the coupling together of the front and rear supports is achieved by means of a lever (24) in the handle assembly (14) for rotation by the user when the rear support (8) has reached its forward position; rotation in one direction releasing a link (16) pivotally attached to the front support (7), to allow the link (16) to engage a pin (17) on the rear support (8); rotation in the other direction causing the link (16) to disengage the pin (17), causing the front and rear supports to be decoupled.

4. A sunroof according to any of the preceding claims, wherein means (28,29) are provided to prevent movement of the front support (7) during raising and lowering of the rear edge of the panel (4) and allowing the front support (7) to be released on coupling together of the front and rear supports to enable rearwards sliding of the supports to open the sunroof.

5. A sunroof according to claims 3 and 4, wherein rotation of the lever (24) in the handle assembly (14) in the one direction causes both the front support to be released and the front and rear supports (7,8) to be coupled together; rotation of the lever (24) in the other direction causing both the movement of the front support to be inhibited and the front and rear supports to be decoupled.

6. A sunroof according to claim 3 or any claim when dependent thereon, wherein rotation of the lever (24) in the handle assembly (14) moves a slider (19) which causes the link (16) pivotally attached to the front support (7) to engage and disengage the pin (17) on the rear support; movement of the slider (19) being inhibited by a stop (30), the stop being moved out of the path of travel of the slider (19) when the rear support (8) has reached its forward position to enable coupling together of the front and rear supports and the stop (30) being moved into the path of travel of the slider (19) to inhibit movement thereof when the rear support is moved away from the front support.

Fig.1(A).

Fig.1(B).

# Fig.2.

02729+3

0272943

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 161 439 (WEBASTO-WERK W. BAIER) <br> * figure 3 * <br> --- | 1 | B 60 J 7/04 <br> B 60 J 7/19 |
| D,A | GB-A-2 078 295 (VERNEULEN-HOLLANDIA OCTROOIEN B.D.) <br> * figure 6 * <br> ----- | 1 | |

TECHNICAL FIELDS SEARCHED (Int. Cl.4)

B 60 J 7/00

The present search report has been drawn up for all claims

| Place of search | Date of completion of the search | Examiner |
|---|---|---|
| BERLIN | 29-02-1988 | BECKER W D H |